Europäisches Patentamt

European Patent Office

Office européen des brevets

(19)

(11) Veröffentlichungsnummer: **0 193 864**
**B1**

(12) # EUROPÄISCHE PATENTSCHRIFT

(45) Veröffentlichungstag der Patentschrift :
20.09.89

(21) Anmeldenummer : 86102521.1

(22) Anmeldetag : 27.02.86

(51) Int. Cl.⁴ : **B 23 K 9/02**, B 23 K 9/16, B 23 K 9/18

(54) Vorrichtung zur adaptiven Schweisskopfführung.

(30) Priorität : 28.02.85 DE 3507012

(43) Veröffentlichungstag der Anmeldung :
10.09.86 Patentblatt 86/37

(45) Bekanntmachung des Hinweises auf die Patenterteilung : 20.09.89 Patentblatt 89/38

(84) Benannte Vertragsstaaten :
CH DE GB LI SE

(56) Entgegenhaltungen :
DE—A— 2 546 894
DE—B— 2 546 221
US—A— 4 507 541
"Schweissen und Schneiden '82", 29.09.82-01.10.82, Berlin; Veranstalter: Deutscher Verband für Schweisstechnik e.V.

(73) Patentinhaber : Eichhorn, Friedrich, Professor Dr.-Ing.
Fichthang 2
D-5100 Aachen (DE)

(72) Erfinder : Oster, Eckhard, Dipl.-Ing.
Dillenburgerstrasse 17
D-5901 Wilnsdorf-Rudersdorf (DE)

(74) Vertreter : Selting, Günther et al
Patentanwälte Von Kreisler-Schönwald-Fues-Keller
Selting-Werner Deichmannhaus am Hauptbahnhof
D-5000 Köln 1 (DE)

## Beschreibung

Die Erfindung betrifft ein Zweidraht-Schweißkopfführungssystem zum Lichtbogenschweißen nach dem Oberbegriff des Patentanspruchs 1.

Beim vollmechanisierten Lichtbogenschweißen mit Koordinaten-Schweißmaschinen wird oft, z. B. wenn sich ein Bauteil während des Schweißens verzieht, eine automatische Korrektur der Schweißkopfstellung relativ zur Schweißfuge erforderlich. Hierfür sind bereits zahlreiche Lösungen vorgeschlagen worden. So wird oft mit Sensoren gearbeitet, die in der Regel räumlich getrennt vom Schweißbrenner angebracht sind und deshalb einen erheblichen Aufwand zur Kompensation des dadurch entstehenden Meßfehlers, insbesondere bei größeren Fugenabweichungen, erfordern.

Ein bekanntes Zweidraht-Schweißkopfführungssystem, von dem der Oberbegriff des Patentanspruchs 1 ausgeht (Buch « Schweißen und Schneiden '82 », 1982, Verlag der Schweißtechnik (DVS) GmbH, Düsseldorf, 183-189), weist eine Meßeinrichtung zur Messung der Bogenströme oder Bogenspannungen der beiden parallelen Elektroden und eine Steuereinrichtung zum Antrieb eines Motors, der Seitenabweichungen der beiden Lichtbögen von der Schweißfuge in Abhängigkeit von den Signalen der Meßeinrichtung korrigiert, auf. Ein weiterer Motor korrigiert die Höhenlage der beiden Elektroden. Der Schweißkopfhalter kann um eine senkrecht durch die Schweißfuge hindurchgehende Achse gedreht werden, um eine Verdrehung des Brenners um bis zu 70° aus der Paralleldrahtstellung in Richtung Tandemstellung zu erreichen. Durch die Drehung des Schweißkopfhalters soll ein ausreichender Einbrand in der Fugenmitte gewährleistet werden. Diese Drehung erfolgt nicht unter motorischer Steuerung. Das bekannte Schweißkopfführungssystem setzt voraus, daß die Schweißfuge in Richtung des Längssupports verläuft. Die Herstellung nicht-geradliniger Schweißfugen kann mit dem System nicht überwacht werden, weil die Regelmöglichkeit auf die Veränderung der Seitenlage und der Höhenlage des Schweißkopfes beschränkt ist.

Bei einem weiteren bekannten Zweidraht-Schweißkopfführungssystem (DE-A-25 46 894) werden die Ströme der beiden Elektroden ausgewertet. Die Differenz der beiden Ströme steuert einen Motor für die Elektrodenführung seitlich zur Richtung der Schweißfuge. Beide Elektroden sind in einer rechtwinklig zur Schweißfuge verlaufenden vertikalen Ebene angeordnet. Auch dieses System setzt voraus, daß die Schweißfuge quer zu der Richtung verläuft, in der der Motor den Schweißkopfhalter verstellen kann. Das Führungssystem ist wegen der Beschränkung der Regelmöglichkeit der Schweißstelle auf eine ganz bestimmte Koordinatenrichtung in seinen Anwendungsmöglichkeiten stark begrenzt. Es eignet sich lediglich für geradlinige Schweißnähte, die in Richtung des Längssupports verlaufen, und deren Position durch Verstellen des Quersupports korrigierbar ist.

Der Erfindung liegt die Aufgabe zugrunde, ein Zweidraht-Schweißkopfführungssystem der im Oberbegriff des Patentanspruchs 1 angegebenen Art mit erweiterten Anwendungsmöglichkeiten und verbesserter Schweißkopfführung zu schaffen, wobei der Schweißkopf entlang einer beliebig verlaufenden Schweißfuge jeweils selbsttätig so eingestellt wird, daß sich eine gleichmäßige Schweißnaht ergibt.

Die Lösung dieser Aufgabe erfolgt erfindungsgemäß mit den kennzeichnenden Teil des Patentanspruchs 1 angegebenen Merkmalen.

Bei dem erfindungsgemäßen Zweidraht-Schweißkopfführungssystem wird anhand der Signale der Meßeinrichtung der Dreh- bzw. Schwenkwinkel des Schweißkopfhalters geregelt, so daß die Dreh- oder Schwenkposition die Richtung der Schweißfuge angibt. Aus der Schweißfugenrichtung werden anschließend die erforderlichen Bewegungskomponenten für die Verstellung des Längssupports und des Seitensupports unter Berücksichtigung des Sollwerts der Schweißgeschwindigkeit ermittelt. Auf diese Weise ist es möglich, nicht nur den Schweißkopfhalter in bezug auf die Schweißfuge in definierter Weise auszurichten, sondern auch die Antriebe für Längssupport und Seitensupport so zu steuern, daß sich eine konstante Bahngeschwindigkeit selbst bei nicht-geradlinigen Schweißnähten ergibt.

Nach der Erfindung wird der Winkel der Elektrodenebene in bezug auf die Schweißnaht konstant gehalten, wobei sich ein bestimmter absoluter Winkelwert des Schweißkopfhalters in bezug auf das ortsfeste Koordinatensystem ergibt. Anhand des absoluten Winkelwertes des Schweißkopfhalters werden dann die Geschwindigkeitskomponenten in dem Koordinatensystem zur Erzielung einer vorgegebenen Bahn-Sollgeschwindigkeit bestimmt.

Das erfindungsgemäße Schweißkopfführungssystem ist sowohl bei dem Metall-Schutzgasverfahren als auch bei dem Unterpulver-Verfahren anwendbar.

Vorteilhafte Weiterbildungen des Zweidraht-Schweißkopfführungssystem sind in den Ansprüchen 2 bis 6 angegeben.

Im folgenden werden unter Bezugnahme auf die Zeichnungen Ausführungsbeispiele der Erfindungen näher erläutert.

Es zeigen :

Fig. 1 die schematische Darstellung einer mit Hilfe eines Elektromotors verdrehbaren Schweißkopfhalters zum Lichtbogenschweißen von Kehlnähten in horizontaler Lage mit einem Zweidraht-Schweißkopf,

Fig. 2 ein Blockschaltbild der Meßeinrichtung,

Fig. 3 ein Blockschaltbild der Steuereinrichtung beim Kehlnahtschweißen in horizontaler Lage,

Fig. 4 die schematische Darstellung eines mit Hilfe eines Elektromotors verdrehbaren Schweißkopfhalters zum Lichtbogenschweißen in Wannenlage,

Fig. 5 ein Blockschaltbild der Steuereinrichtung beim Tandemschweißen in Wannenlage,

Fig. 6 die schematische Darstellung eines mit Hilfe eines Elektromotors verdrehbaren Schweißkopfhalters zum Erstellen von Füllagen in Wannenlage mit einem Doppeldraht-Schweißkopf.

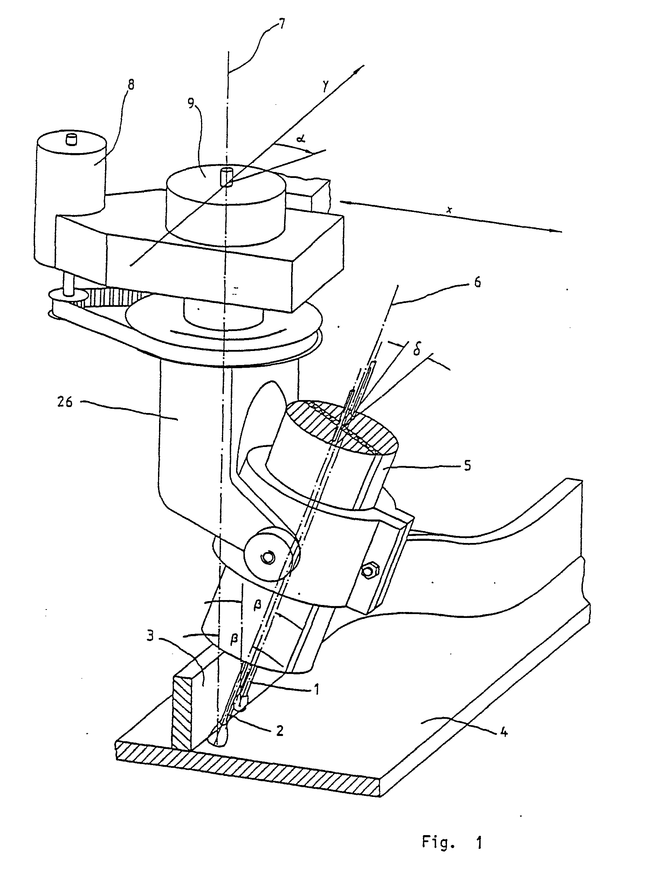

Die Vorrichtung nach Fig. 1 ermöglicht den Einsatz des Zweidraht-Lichtbogenschweißverfahrens zum Herstellen von Kehlnähten in horizontaler Lage. Erfahrungsgemäß lassen sich Kehlnähte in dieser Lage fehlerfrei schweißen, wenn beide Drahtelektroden 1, 2 in einem Winkel β von ca. 15° bis 45° gegenüber dem senkrechten Bauteil 3 voreingestellt sind. Der zwischen der Schweißfuge und der durch die Elektrodenachsen gelegten Ebene bestehende Auslenkwinkel δ wird mittels eines verdrehbaren Schweißkopfhalters 26 für einen Zweidraht-Schweißkopf 5 auf einem vorbestimmten Wert konstant gehalten ; dabei ist jene Ebene so bestimmt, daß die Achse der in Schweißrichtung Y vorlaufenden Elektrode 1 das senkrechte Bauteil 3 etwas oberhalb der Stoßstelle und die Achse der hinteren Elektrode das waagrechte Bauteil 4 in einem bestimmten Abstand trifft. Hierzu kann der Zweidrahtschweißkopf 5 um seine Achse 6 um den Winkel δ bis zu 45° aus der Tandemstellung heraus verdreht werden. Mit diesen beiden Winkeln β und δ, die sich mit Hilfe der Vorrichtung nach Fig. 1 vor der Schweißung einstellen lassen, ist die Stellung der Drahtelektroden relativ zur Schweißfuge bestimmt.

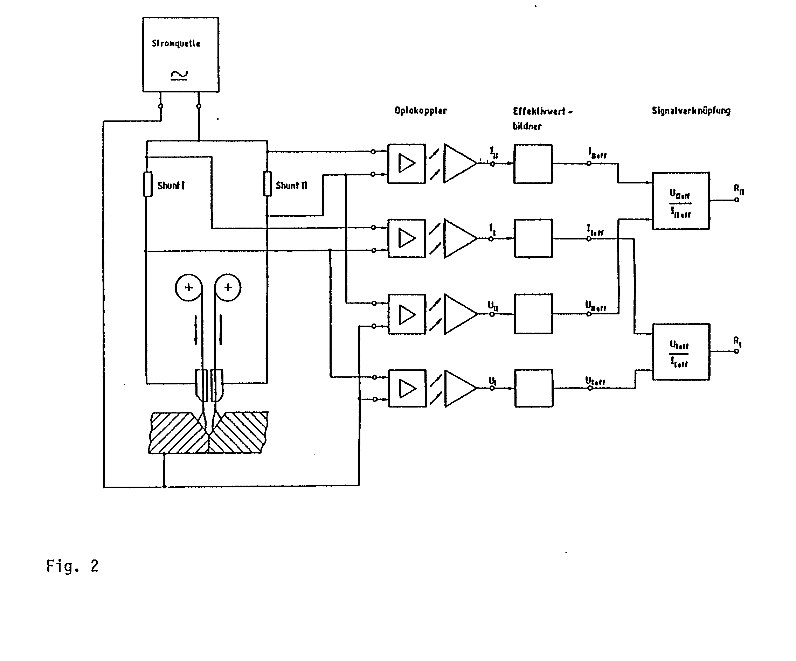

Statt eines Zweidraht-Schweißkopfs können auch zwei Einzelschweißköpfe so angebracht sein, daß sich die oben beschriebene Anordnung der Drahtelektroden ergibt. In diesem Fall lassen sich ebenso wie bei einem Zweidraht-Schweißkopf, bei welchem die Drahtelektroden elektrisch gegeneinander isoliert dem Schweißprozeß zugeführt werden müssen, die Schweißströme und Schweißspannungen beider Lichtbögen gemäß Fig. 2 getrennt erfassen. Auch wenn nur eine Schweißstromquelle verwendet wird, teilt sich der gesamte Schweißstrom gemäß dem ersten Kirchhoff'schen Gesetz in zwei Teilströme $I_I$ und $I_{II}$ auf, welche mit Hilfe von in die Teilstromkreise eingeschleiften Meßwiderständen gemessen werden können. Wenn sich nun der Abstand zwischen dem senkrechten Bauteil 3 und dem Zweidraht-Schweißkopf 5 z. B. durch eine seitliche Fugenabweichung ändert, ändert sich auch der Abstand zwischen der Schweißkopfunterkante und dem werkstückseitigen Lichtbogenfußpunkt der Drahtelektrode 1, wodurch sich bei gleicher Schweißmaschineneinstellung (gleicher Drahtvorschub, gleiche Stromquellenkennlinie) die elektrischen Betriebsdaten dieses Lichtbogens ändern. Bei der Verwendung einer gemeinsamen Schweißstromquelle für beide Lichtbögen ändert sich hierbei bezüglich des Lichtbogens der Drahtelektrode 1 praktisch nur der Strom $I_I$, während bei

zwei getrennten Stromquellen, insbesondere dann, wenn die Schweißstromquelle für die Drahtelektrode 1 eine stark fallende Kennlinie aufweist, insbesondere auch die Schweißspannung $U_I$ sich erheblich ändert.

Bei einer Änderung des Abstands zwischen dem Zweidraht-Schweißkopf. 5 und dem waagrechten Bauteil 4, z. B. infolge einer Höhenabweichung der Schweißfuge, ändern sich bei der oben beschriebenen Elektrodenanordnung der Abstand zwischen der Schweißkopfunterkante und dem bauteilseitigen Fußpunkt des Lichtbogens der Drahtelektrode 2 und ebenso wiederum bei gleichbleibender Schweißmaschineneinstellung die elektrischen Schweißparameter $I_{II}$ bzw. $U_{II}$ dieses Lichtbogens in der oben beschriebenen Weise.

Um nun von der Art der Energiequellen auch bei einer Kombination von zwei unterschiedlichen Energiequellen, bezüglich Stromform (Gleichstrom, Wechselstrom) und Kennliniencharakteristik (Konstantspannungscharakteristik, fallende Charakteristik) unbhängig die Abstände zwischen Schweißkopfunterkante und jeweiligem werkstückseitigem Lichtbogenfußpunkt erfassen zu können, empfiehlt es sich also, die Strom- und Spannungswerte beider Lichtbögen zu messen. Optokoppler dienen jeweils zur galvanischen Trennung der Schweißstromkreise und der Auswerteelektronik und gleichzeitig als Meßverstärker. Im Hinblick auf die Verarbeitung von Signalen von Wechselstromlichtbögen werden mit Hilfe von Effektivwertbildern die Effektivwerte $I_{Ieff}$, $I_{IIeff}$, $U_{Ieff}$, $U_{Ieff}$, $U_{IIeff}$ gebildet. Diese Signale können nun jeweils weiter verknüpft werden, um Meßsignale, die dem Abstand zwischen Schweißkopfunterkante und jeweiligem werkstückseitigem Lichtbogenfußpunkt proportional sind, zu erhalten. Eine relativ einfache Möglichkeit der Signalverknüpfung kann dabei die Nachbildung der mittleren Lichtbogenimpedanzen $R_I$, $R_{II}$ darstellen, indem die Spannungseffektivwerte $U_{Ieff}$, $U_{IIeff}$ durch die jeweiligen Stromeffektivwerte $I_{Ieff}$, $I_{IIeff}$ dividiert werden.

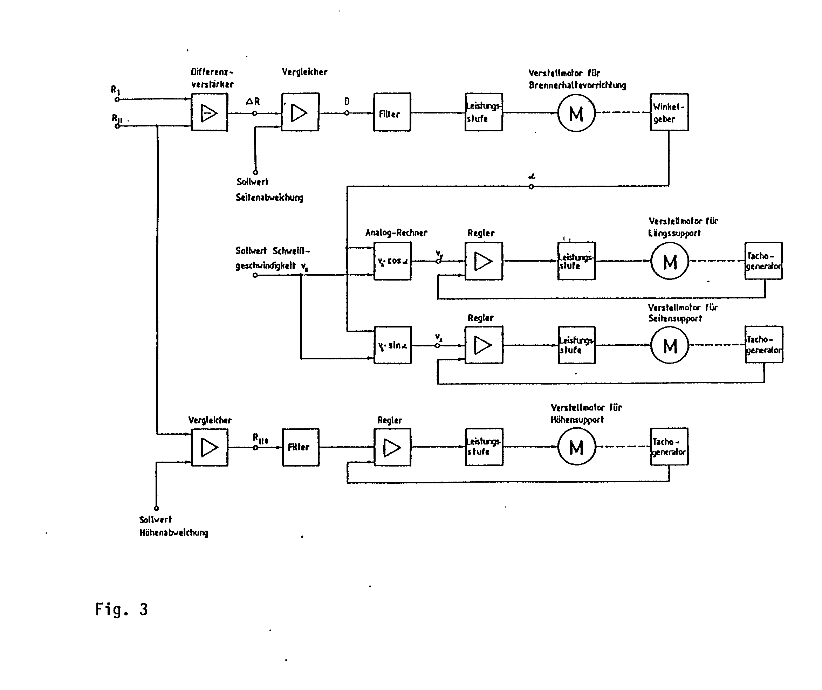

Die weitere Verarbeitung dieser Signale $R_I$, $R_{II}$ kann nun mit Hilfe eines Mikroprozessors oder, wie in Fig. 3 gezeigt, analog erfolgen. Hierbei wird zunächst die Differenz $\Delta R$ der Signale $R_I$ und $R_{II}$ gebildet. Auch wenn der Doppeldraht-Schweißkopf die gewünschte Sollstellung relativ zur Schweißfuge innehalt, kann je nach Einstellung der Winkel ρ und δ der Abstand der Schweißkopfunterkante zum bauteilseitigen Fußpunkt des Lichtbogens 1 verschieden sein vom Abstand der Schweißkopfunterkante zum werkstückseitigen Fußpunkt des Lichtbogens 2, so daß die Signale $R_I$ und $R_{II}$ eine gewisse Differenz $\Delta R$ aufweisen. Daher wird vor der Schweißung ein Sollwert für die Seitenabweichung, welcher mit $\Delta R$ von einem weiteren Differenzverstärker verglichen wird, so vorgegeben, daß das erzeugte Signal D gleich Null ist. Mit Hilfe dieses Sollwerts läßt sich somit der Soll-Abstand des Zweidraht-Schweißkopfes 5 vom senkrechten Bauteil 3 gezielt einstellen.

Liegt nun eine seitliche Fugenabweichung, z.

B. eine Vergrößerung des Abstands zwischen Doppeldraht-Schweißkopf und senkrechtem Bauteil vor, so ändert sich Δ R und D wird ungleich Null. Mit Hilfe dieses Signals D wird ein Elektromotor 8 angesteuert, wobei aus dem Vorzeichen dieses nun vorliegenden Signals D die Drehrichtung des Motors hervorgeht. Dieser Motor dreht dann den Schweißkopfhalter 26 nach Fig. 1 solange um eine senkrechte Schwenkachse 7 unter Bewegung der Elektrode 1 auf das senkrechte Bauteil zu, bis D wieder zu Null wird und die Sollstellung der Elektroden relativ zur Fuge wiederhergestellt ist. Für die Funktion dieses Regelkreises ist es erforderlich, daß die Schwenkachse 7 die Achse der Elektrode 2 in dem Punkt schneidet, in welchem die Achse der Drahtelektrode 2 das waagrechte Bauteil 4 trifft.

Der Verdrehwinkel $\alpha$ des Schweißkopfhalters wird synchron von einem Winkelgeber 9 erfaßt, der ein dem Verdrehwinkel $\alpha$ proportionales elektrisches Signal liefert. Aus diesem Signal und einem für die Schweißgeschwindigkeit $v_s$ vorzugebenden Sollwert bilden Analog-Rechner kontinuierlich die Sollwerte für die Verstellgeschwindigkeiten des Längs- bzw. des Quersupports gemäß den Beziehungen $V_x = v_s \cdot \sin \alpha$ (Quersupport) und $V_y = v_s \cdot \cos \alpha$ (Längssupport). Die so ermittelten Verstellgeschwindigkeiten des Längs- und des Quersupports ermöglichen nun eine genaue Führung des Zweidraht-Schweißkopfs entlang der Schweißfuge auch bei beliebig gekrümmtem Fugenverlauf und geschlossener Kontur, wobei die augenblickliche Bewegungsrichtung durch den sich einstellenden Verdrehwinkel $\alpha$ vorgegeben wird und gleichzeitig die Bewegungsgeschwindigkeit $v_s$ tangential zur Schweißfuge sowie die Stellung der Elektroden relativ zur Fuge konstant gehalten werden.

Der Abstand zwischen Zweidraht-Schweißkopf 5 und waagrechtem Bauteil wird konstant gehalten, indem das Signal $R_{II}$ des Lichtbogens der Elektrode 2 mit einem vorzugebenden Sollwert für die Höhenabweichung verglichen wird und, falls sich hierbei eine Differenz ergibt, dieses Differenzsignal $R_{IIO}$ zur Ansteuerung des Antriebsmotors des Höhensupports herangezogen wird. Aus dem Vorzeichen dieses Differenzsignals $R_{IIO}$ ergibt sich die Drehrichtung des Motors, der mit Hilfe des Höhensupports den Schweißkopfhalter nach Fig. 1 und somit auch den Zweidraht-Schweißkopf 5 solange in vertikaler Richtung nachstellt, bis $R_{IIO}$ zu Null wird und somit der vorgegebene Abstand des Schweißkopfs zum Werkstück wieder hergestellt ist.

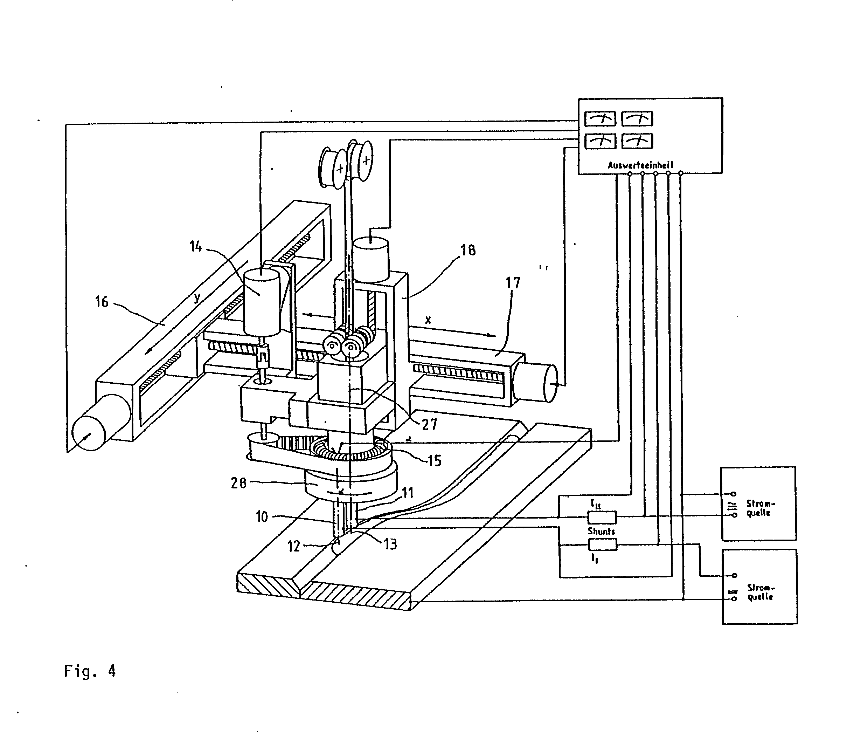

Mit Hilfe einer Vorrichtung gem. Fig. 4 lassen sich die kennzeichnenden Merkmale des Anspruchs 1 beim Herstellen von Nähten in Wannenlage an Stumpfstößen mit Y- oder doppel-Y-förmig vorbereiteten Fugen sowie an T-Stößen verwirklichen. Die Achsen Drahtelektroden 12 und 13 sind hierbei senkrecht und relativ zur Schweißfuge in Tandemstellung angeordnet. Eine solche Stellung der Drahtelektroden ermöglicht erfahrunsgemäß hohe Schweißgeschwindigkeiten und gute Einbrandverhältnisse im Nahtwurzelbereich.

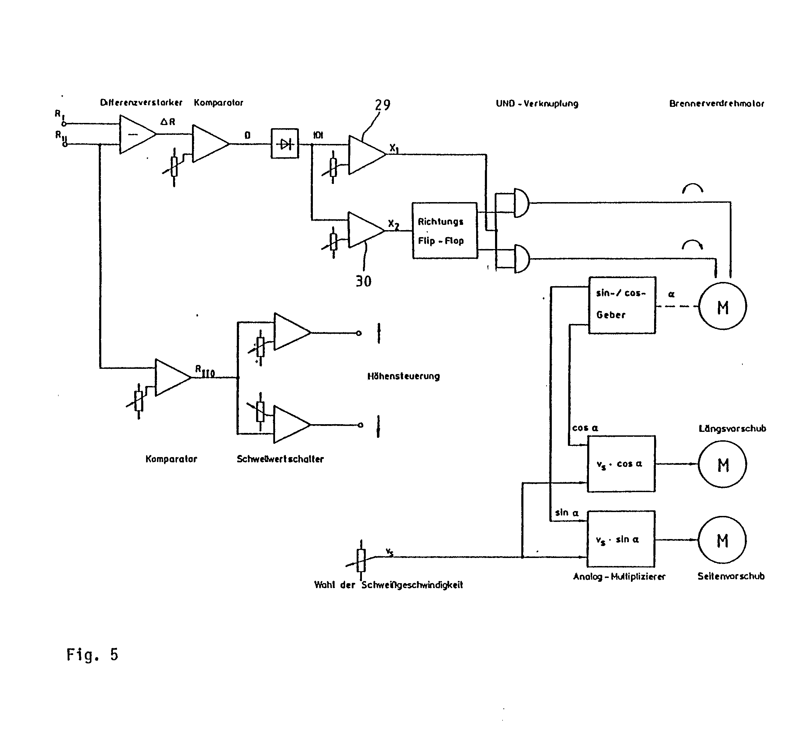

Auch hierbei können ein Zweidraht-Schweißkopf, bei dem eine elektrisch getrennte Zuführung der Drahtelektroden zum Schmelzbad gewährleistet sein muß, ebenso wie zwei Einzelschweißköpfe 10,11, welche in einem gemeinsamen Schweißkopfhalter 28 eingespannt sind, eingesetzt werden. Die Lichtbogen-Parameter $I_I$, $I_{II}$, $U_I$, $U_{II}$ werden wie oben beschrieben getrennt erfaßt und daraus Signale $R_I$, $R_{II}$ gemäß Fig. 2 gebildet, die wiederum den Abständen zwischen Schweißkopfunterkante und jeweiligem Lichtbogenfußpunkt proportional sind. Diese Signale können mit Hilfe eines Mikroprozessors oder, wie in Fig. 5 gezeigt, in analoger Weise weiterverarbeitet werden.

Im Schweißbetrieb kann sich nach Fig. 5 auch bei fugenmittiger Brennerstellung eine Schweißparameter-abhängige Differenz Δ R der Signale $R_I$ und $R_{II}$ ergeben, die durch einen entsprechend vorgegebenen Sollwert von einem Komparator kompensiert wird, so daß das sich ergebende Differenzsignal D bei fugenmittiger Anordnung der Elektroden gleich Null ist.

Tritt nun eine Fugenabweichung auf, so verringert sich zwangsläufig immer der Abstand zwischen der Unterkante des Schweißkopfs 10 und dem werkstückseitigen Fußpunkt des Lichtbogens der in Schweißrichtung gesehen vorlaufenden Elektrode 12, so daß sich das aus den Lichtbogen-Parametern $I_I$, $U_I$ gebildete Signal $R_I$ verringert. Hierdurch nimmt das Differenzsignal D einen von Null verschiedenen Wert an, und es wird, wenn der Betrag des Differenzsignals D einen gewissen einstellbaren Schwellwert überschreitet, mit Hilfe eines ersten Schwellwertschalters 29 ein Signal $X_1$ erzeugt, das ein Ansteuern eine Drehantriebs 14 in eine zunächst beliebig vorgegebene Richtung bewirkt. Dieser Drehantrieb verdreht nun den Schweißkopfhalter um eine senkrechte, mit der Achse der in der Schweißrichtung gesehen hinteren Elektrode 13 übereinstimmende Achse 27 solange, bis entweder der Betrag von D unter den eingestellten Schwellwert absinkt, wodurch $X_1$ nicht mehr vorhanden ist und die Elektrode 12 sich wieder in Fugenmitte befindet, oder aber, wenn das nicht der Fall ist, und der Betrag von D weiter ansteigt, solange, bis ein zweiter Schwellwertschalter 30, dessen einstellbarer Schwellwert etwas oberhalb des oben genannten Schwellwerts liegt, anspricht und ein Signal $X_2$ liefert. Dieses bewirkt, daß die Drehrichtung des Motors 14 umgekehrt wird und nunmehr der Schweißkopfhalter solange in die entgegengesetzte Richtung verdreht wird, bis wiederum $X_1$ nicht mehr vorliegt, d. h. der Betrag von D kleiner als der vorgegebene erste Schwellwert ist, die Elektrode 12 sich also wieder in der Fugenmitte befindet.

Das kann dadurch bewirkt werden, daß ein von $X_2$ angesteuertes Richtungs-Flip-Flop, z. B. ein sogenanntes J-K-Master-Slave-Flip-Flop, jeweils ein der Drehrichtung des Motors entsprechendes Signal liefert. Mit Hilfe einer nachfolgenden UND-Verknüpfung kann dann bewirkt werden, daß der Motor sich jeweils solange in der von dem Richtungs-Flip-Flop vorgegebenen Richtung unabhängig davon, ob X₂ noch vorliegt oder nicht mehr, dreht, wie das Signal X₁ vorhanden ist.

Die Verdrehung des Schweißkopfhalters um die Achse 13, der Verdrehwinkel α, wird synchron von einem Winkelgeber 15 erfaßt, der ein dem Verdrehwinkel proportionales elektrisches Signal liefert. Aus diesem Signal werden wiederum, wie bereits geschildert, gemäß den Beziehungen $V_x = v_s \cdot \sin \alpha$ und $V_y = v_s \cdot \cos \alpha$ die Verstellgeschwindigkeiten für den Längssupport 16 und den Quersupport 17 ermittelt, so daß eine genaue Führung der Schweißköpfe entlang der Schweißfuge auch bei beliebig gekrümmtem Fugenverlauf und geschlossener Kontur ermöglicht wird, wobei die augenblickliche Bewegungsrichtung durch den sich einstellenden Winkel α vorgegeben wird und gleichzeitig die Bewegungsgeschwindigkeit $v_s$ tangential zur Schweißfuge sowie die Tandemanordnung der Elektroden relativ zur Fuge konstant gehalten werden.

Anstelle eines Winkelgebers kann auch ein sogenanntes Sinus-Kosinus-Potentiometer eingesetzt werden, welches dem jeweiligen Sinus- bzw. Kosinuswert des Winkels α proportionale elektrische Signale liefert, woraus dann mit Hilfe einfacher Analog-Multiplizierer die Sollwerte für die Support-Verstellgeschwindigkeiten in der in Fig. 5 gezeigten Weise gebildet werden können.

Der Abstand der Schweißköpfe vom Bauteil kann wiederum in der bereits beschriebenen Weise konstant gehalten werden, indem das Signal R_II des Lichtbogens der in Schweißrichtung gesehen hinteren Elektrode 13 mit einem vorzugebenden Sollwert für die Höhenabweichung verglichen und gegebenenfalls ein Höhensupport 18 angesteuert wird.

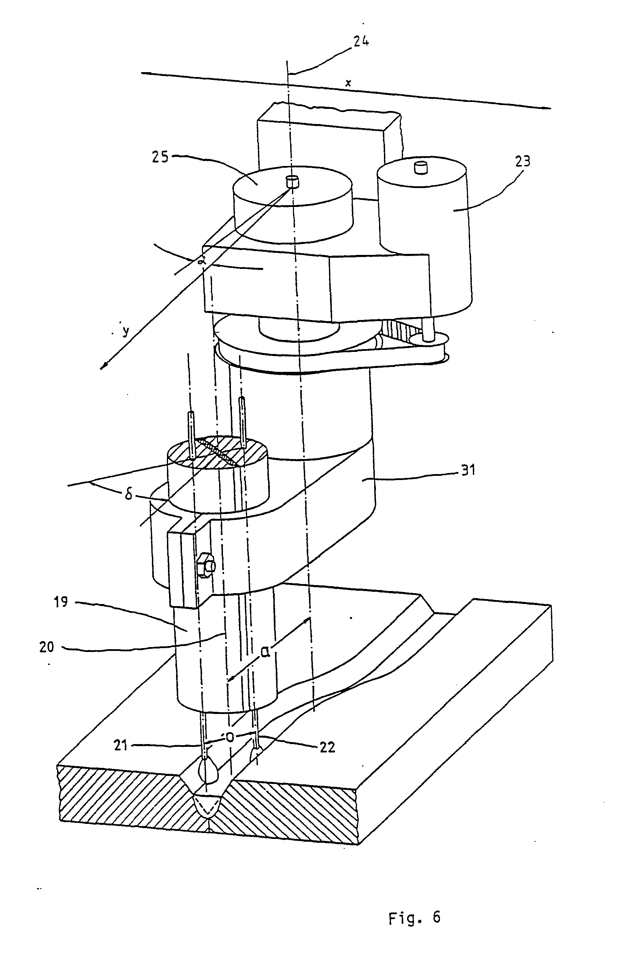

Bei größeren Nahtquerschnitten reicht oft eine Lage nicht aus, um z. B. bei einer Y-Nahtvorbereitung den Fugenquerschnitt zu füllen oder bei einer Kehlnaht in Wannenlage die gewünschte Nahtdicke zu erreichen. Hierbei kann zunächst eine Lage mit zwei in Tandemstellung angeordneten Elektroden eingebracht werden, während weitere Lagen, sogenannte Fülllagen, mit einer hintereinander versetzten bzw. parallelen Anordnung der Elektroden in Wannenlage eingebracht werden können. Wenn dann die Elektroden dabei so gestellt sind, daß jeweils ein Lichtbogen auf einer Fugenflanke brennt, wie in Fig. 6 gezeigt, kann mit den Lichtbögen der Fugenverlauf abgetastet werden. Durch eine Verdrehung des Zweidraht-Schweißkopfs 19 vor der Schweißung um seine in der Mitte zwischen den Elektroden 21, 22 gelegene senkrechte Achse 20 um einen Winkel δ mittels eines Schweißkopfhalters 31 kann eine Anpassung des auf den Fugenquerschnitt projizierten Abstands o der Elektroden an die vorliegende Fugenbreite erzielt werden. Dies ist ebenso bei der Verwendung von zwei Einzelschweißköpfen möglich, wenn diese um eine zwischen beiden Köpfen mittig angeordnete Drehachse bewegt werden können.

Bei einer Fugenabweichung während der Schweißung ergeben sich dann unterschiedliche Abstände zwischen Schweißkopfunterkante und jeweiligem bauteilseitigem Lichtbogenfußpunkt der Elektroden 21, 22, was eine Differenz der Signale R_I, R_II (vgl. Fig. 2) zur Folge hat. Im Gegensatz zur durch die DE-PS 25 46 221 bekannten Vorrichtung wird jedoch mit Hilfe des Differenzsignals D gemäß Fig. 3 ein Drehantrieb 23 angesteuert, wobei die Drehrichtung des Drehantriebs 23 aus dem Vorzeichen dieses Signals hervorgeht. Der Drehantrieb 23 dreht den Schweißkopfhalter solange um eine senkrechte Schwenkachse 24, bis D zu Null wird und der Zweidraht-Schweißkopf 19 sich wieder in Fugenmitte befindet, wobei dieser quer zur Fuge bewegt wird.

Dabei ist es aber erforderlich, daß die Schwenkachse 24 in einem gewissen Abstand a in Schweißrichtung Y gesehen hinter der Mittelachse 20 des Zweidraht-Schweißkopfs angeordnet ist. In engen Fugen, wo die Drahtelektroden 21, 22 nicht annähernd parallel zum Fugenquerschnitt sondern stark hintereinander versetzt sind, also δ wesentlich kleiner als 45° ist, kann der Abstand a auch sehr klein sein.

Der Verdrehwinkel α des Schweißkopfhalters um die Schwenkachse 24 wird synchron von einem Winkelgeber 25 erfaßt, der ein diesem Winkel proportionales elektrisches Signal liefert. Die weitere Signalverarbeitung erfolgt wieder in der bereits beschriebenen und in Fig. 3 dargestellten Weise, so daß auch hierbei eine genaue Führung des Doppeldraht-Schweißkopfs 19 entlang einer beliebig verlaufenden Fuge sowie auch entlang einer geschlossenen Kontur mit Hilfe von Längs- und Quersupport einer Koordinaten-Schweißmaschine möglich ist, wobei die augenblickliche Bewegungsrichtung aus dem sich einstellenden Verdrehwinkel α hervorgeht und der auf die Fuge projizierte Abstand o der Elektrodenachsen sowie die Bewegunsgeschwindigkeit $v_s$ tangential zum augenblicklichen Schweißfugenverlauf konstant gehalten werden.

Der senkrechte Abstand des Zweidraht-Schweißkopfs 19 von den zusammenzufügenden Bauteilen kann konstant gehalten werden, indem abweichend von Fig. 3 die Summe der Signale R_I und R_II gebildet, diese Summe mit einem für die höhenabweichung vorzugebenden Sollwert verglichen und ein Höhensupport in der bereits beschriebenen Weise angesteuert wird.

## Patentansprüche

1. Zweidraht-Schweißkopfführungssystem zum Lichtbogenschweißen von gekrümmten Nahtfugen, mit

je einem von einem Vorschubmotor angetriebenen Längs-, Seiten- und Höhensupport in Richtung der linearen Raumachsen,

zwei mit gegenseitigem Abstand angeordneten elektrisch isolierten Elektroden (1, 2, 10, 11, 21, 22) in einem Schweißkopfhalter (26, 28, 31), der um eine durch die Schweißfuge hindurchgehende Achse drehbar bzw. schwenkbar ist, damit der Winkel (δ), welcher von der die Elektroden enthaltenden Ebene mit der die Längsrichtung der Schweißfuge enthaltenden Ebene eingeschlossen wird, vorgegeben werden kann,

einer Meßeinrichtung zur Messung der Bogenströme und/oder der Bogenspannungen der beiden Elektroden

und einer Steuereinrichtung für den Antrieb des Motors des Seitensupports, um Seitenabweichungen der beiden Lichtbögen von der Schweißfuge in Abhängigkeit von den Signalen der Meßeinrichtung korrigieren zu können, dadurch gekennzeichnet,

daß am Schweißkopfhalter (26, 28, 31) ein Drehantrieb (8, 14, 23) angeordnet ist, der diesen in Abhängigkeit von den Signalen der Meßeinrichtung so um eine senkrecht auf dem Werkstück stehende Dreh- oder Schwenkachse (7, 13, 24) bewegt, daß der Winkel (δ) der Elektrodenebene in bezug zur Ebene in Längsrichtung der Schweißfuge konstant bleibt,

daß ein Winkelgeber (9, 25) den jeweiligen Winkelwert (α) des Schweißkopfhalters in bezug auf eine ortsfeste Koordinate (y) ermittelt,

und daß aus dem Winkelwert (α) und einem vorgegebenen Sollwert (v_s) der Schweißgeschwindigkeit die Verstellgeschwindigkeiten für den Längssupport und den Seitensupport derart ermittelt werden, daß die Bewegungsgeschwindigkeit tangential zur Schweißfuge sowie die Stellung der Elektroden relativ zur Fuge konstant gehalten werden.

2. Zweidraht-Schweißkopfführungssystem nach Anspruch 1, dadurch gekennzeichnet, daß die Schwenkachse (7) des Schweißkopfhalters (26) die Achse der einen Elektrode (2) in demjenigen Punkt schneidet, in dem diese Achse durch die Schweißfuge hindurchgeht.

3. Zweidraht-Schweißkopfführungssystem nach Anspruch 1, dadurch gekennzeichnet, daß die Drehachse (13) des Schweißkopfhalters (28) mit der Achse einer der Elektroden (11) zusammenfällt.

4. Zweidraht-Schweißkopfführungssystem nach Anspruch 1, dadurch gekennzeichnet, daß die Schwenkachse (24) des Schweißkopfhalters (31) parallel zu den Achsen der Elektroden (21, 22) und im Abstand (a) zur Schweißkopfachse verläuft.

5. Zweidraht-Schweißkopfführungssystem nach einem der Ansprüche 1 bis 4, dadurch gekennzeichnet, daß die Steuereinrichtung aus den Bogenströmen und Bogenspannungen die Impedanzwerte (R_I, R_II) ermittelt, deren Differenz (Δ R) mit einem vorgebbaren Sollwert verglichen und zur Steuerung des Drehantriebs (8, 14, 23) benutzt wird.

6. Zweidraht-Schweißkopfführungssystem nach einem der Ansprüche 1 bis 5, dadurch gekennzeichnet, daß Sinus- und Cosinus-Umsetzer vorgesehen sind, die den Winkelwert (α) in einen Sinus- bzw. Cosinusanteil umsetzen und diesen jeweils mit dem Sollwert (v_s) der Schweißgeschwindigkeit multiplizieren, um Stellgrößen für den Quersupport und den Längssupport zu erzeugen.

## Claims

1. A two-wire welding head guide system for arc welding curved seams, comprising
— respective longitudinal, lateral and height supports in the direction of the linear spatial axes, respectively driven by an advance motor,
— two electrically insulated electrodes (1, 2, 10, 11, 21, 22), arranged at a mutual distance, in a welding head holder (26, 28, 31) rotatable or pivotable around an axis extending through the welding groove, so that the angle (δ) enclosed by the plane containing the electrodes and the plane containing the longitudinal direction of the welding groove may be preset,
— a measuring device for measuring the electric arc currents and/or the electric arc voltages of both electrodes,
— and a control means for driving the motor of the lateral support in order to allow a correction of lateral deviations of the two electric arcs from the welding groove in dependence from the signals from the measuring device,
characterised in that
— a rotary drive (8, 14, 23) is provided at said welding head holder (26, 28, 31), which moves said welding head holder around a rotational or swivelling axis (7, 13, 24) perpendicular to a work piece in dependence from the signals from said measuring device such that the angle (α) of the electrode plane with respect to the plane in the longitudinal direction of the welding groove remains constant,
— an angle detector (9, 25) detects the respective angle value (α) of said welding head holder with respect to a stationary coordinate (y),
— and that the rates of displacement of the longitudinal and the lateral supports are determined from the angle value (α) and a predetermined target value (v_s) such that the speed of movement tangential to the welding groove and the position of the electrodes relative to said groove are maintained constant.

2. The two-wire welding head guide system according to claim 1, wherein the swivel axis (7) of said welding head holder (26) intersects the axis of the one electrode (2) in that point in which that axis passes through said welding groove.

3. The two-wire welding head guide system according to claim 1, wherein said rotational axis (13) of said welding head holder (28) coincides with the axis of one of the said electrodes (11).

4. The two-wire welding head guide system according to claim 1, wherein said swivel axis (24) of the welding head holder (31) extends in parallel to the axes of the electrodes (21, 22) and in the distance (a) to the axis of the welding head.

5. The two-wire welding head guide system according to one of claims 1 to 4, wherein said control device determines the impedance values (R_I, R_II) from the electric are currents and the electric arc voltages, the difference (Δ R) of which values is compared with a presettable target value and used to control the rotary drive (8, 14, 23).

6. The two-wire welding head guide system according to one of claims 1 to 5, wherein sine and cosine converters are provided to convert the angle value (α) into a sine and a cosine portion, respectively, and to respectively multiply these portions by the target value (v_s) in order to generate manipulated variables for the transversal and the longitudinal support.


**Revendications**

1. Dispositif de guidage de tête de soudage à deux électrodes, permettant le soudage à l'arc électrique de joints de soudure courbés, comprenant :

un support longitudinal, un support latéral et un support vertical qui sont chacun entraînés, suivant les directions des axes linéaires de l'espace, par un moteur respectif d'avancement,

deux électrodes (1, 2 ; 10 ; 11 ; 21, 22) isolées électriquement et disposées à une certaine distance l'une de l'autre dans un porte-tête de soudage (26, 28, 31) qui peut tourner ou pivoter autour d'un axe passant par le joint de soudure, afin de pouvoir fixer à l'avance l'angle (δ) que le plan contenant les électrodes forme avec le plan contenant la direction longitudinale du joint de soudure,

un dispositif de mesure permettant de mesurer, pour les deux électrodes, les courants des arcs et/ou les tensions des arcs,

et un dispositif de commande pour l'entraînement du moteur du support latéral, afin de pouvoir corriger, en fonction des signaux du dispositif de mesure, les écarts latéraux des deux arcs électriques par rapport au joint de soudure,

caractérisé en ce

qu'il est disposé, sur le porte-tête de soudage (26, 28, 31), un moyen d'entraînement en rotation (8, 14, 23) qui déplace celui-là en fonction des signaux du dispositif de mesure et autour d'un axe de rotation ou de pivotement (7, 13, 24) orienté perpendiculairement à la pièce à souder, d'une façon telle que l'angle (δ) du plan des électrodes par rapport au plan contenant la direction longitudinale du joint de soudure demeure constant,

en ce qu'un capteur angulaire (9, 25) détermine la valeur angulaire instantanée (α) du porte-tête de soudage par rapport à un axe fixe de coordonnées (y)

et en ce que, à partir de cette valeur angulaire (α) et d'une valeur nominale assignée (v_s), fixée à l'avance, de la vitesse de soudage, les vitesses de déplacement en translation du support longitudinal et du support latéral sont déterminées de façon telle que la vitesse de déplacement tangentiellement au joint de soudure, ainsi que la position des électrodes par rapport à ce joint, soient maintenues constantes.

2. Dispositif de guidage de tête de soudage à deux électrodes suivant la revendication 1, caractérisé en ce que l'axe de pivotement (7) du porte-tête de soudage (26) recoupe l'axe de l'une (2) des électrodes au point où cet axe traverse le joint de soudure.

3. Dispositif de guidage de tête de soudage à deux électrodes suivant la revendication 1, caractérisé en ce que l'axe de rotation (13) du porte-tête de soudage (28) coïncide avec l'axe de l'une (11) des électrodes.

4. Dispositif de guidage de tête de soudage à deux électrodes suivant la revendication 1, caractérisé en ce que l'axe de pivotement (24) du porte-tête de soudage (31) s'étend parallèlement aux axes des électrodes (21, 22) et à une certaine distance (a) de l'axe de la tête de soudage.

5. Dispositif de guidage de tête de soudage à deux électrodes suivant l'une des revendications 1 à 4, caractérisé en ce que le dispositif de commande détermine, à partir des courants des arcs et des tensions des arcs, les valeurs d'impédance (R_I, R_II) dont la différence (Δ R) est comparée à une valeur nominale assignée pouvant être donnée à l'avance et est utilisée pour commander le moyen d'entraînement en rotation (8, 14, 23).

6. Dispositif de guidage de tête de soudage à deux électrodes suivant l'une des revendications 1 à 5, caractérisé en ce qu'il est prévu des convertisseurs sinus et cosinus qui transforment la valeur angulaire (α) en respectivement une partie sinus et une partie cosinus et multiplient respectivement ces dernières par la valeur nominale assignée (v_s) de la vitesse de soudage afin de fournir des grandeurs de déplacement pour le support transversal et le support longitudinal.

Fig. 1

Fig. 2

Stromquelle

Shunt I    Shunt II

Optokoppler    Effektivwertbildner    Signalverknüpfung

$I_{II}$    $I_{IIeff}$    $\dfrac{U_{IIeff}}{I_{IIeff}}$    $R_{II}$

$I_{I}$    $I_{Ieff}$

$U_{II}$    $U_{IIeff}$    $\dfrac{U_{Ieff}}{I_{Ieff}}$    $R_{I}$

$U_{I}$    $U_{Ieff}$

EP 0 193 864 B1

Differenzverstärker

Vergleicher

Verstellmotor für
Brennerhaltevorrichtung

$R_I$

$R_{II}$

$\Delta R$

D

Filter

Leistungsstufe

M

Winkelgeber

Sollwert
Seitenabweichung

$\alpha$

Analog-Rechner

Regler

Verstellmotor für
Längssupport

Sollwert Schweißgeschwindigkeit $v_s$

$v_s \cdot \cos \alpha$

$v_y$

Leistungsstufe

M

Tachogenerator

Regler

Verstellmotor für
Seitensupport

$v_s \cdot \sin \alpha$

$v_x$

Leistungsstufe

M

Tachogenerator

Vergleicher

Regler

Verstellmotor für
Höhensupport

$R_{III}$

Filter

Leistungsstufe

M

Tachogenerator

Sollwert
Höhenabweichung

Fig. 3

Fig. 4

Stromquelle

Stromquelle

Auswerteeinheit

Shunts

$I_{II}$

$I_t$

17

18

x

27

15

11

13

12

10

28

14

y

16

Fig. 5

Fig. 6